# EUROPÄISCHE PATENTSCHRIFT

(11) **EP 0 864 771 B1**
(45) Veröffentlichungstag und Bekanntmachung des Hinweises auf die Patenterteilung: **02.01.2004**
(21) Anmeldenummer: 98103403.6
(22) Anmeldetag: 27.02.1998
(51) Int. Cl.: F16D 33/18

(54) **Hydrodynamische Kupplungsbaueinheit zur Integration in einer Kraftübertragungseinheit und Kraftübertragungseinheit**
Hydrodynamic coupling assembly for integration in a transmission unit and transmission unit
Dispositif d'accouplement hydraulique pour intégration dans une unité de transmission et unité de transmission

(30) Priorität: 12.03.1997 DE 19710070
(43) Veröffentlichungstag der Anmeldung: 16.09.1998
(73) Patentinhaber: Voith Turbo GmbH & Co. KG, 89522 Heidenheim (DE)
(72) Erfinder: Hellinger, Walter, 97980 Bad Mergentheim-Rot (DE)
(74) Vertreter: Dr. Weitzel & Partner

(56) Entgegenhaltungen:
- DE-A- 3 434 860
- DE-A- 4 224 728
- DE-A- 19 614 590
- DE-C- 802 029
- US-A- 2 281 161

## Beschreibung

Die Erfindung betrifft eine hydrodynamische Kupplungsbaueinheit nach dem Oberbegriffe des Anspruchs 1; sowie eine Kraftübertragungseinheit nach dem Oberbegriff des Anspruches 12.

Hydrodynamische Kupplungen zur Integration in Kraftübertragungseinheiten, insbesondere zur Drehmomentenübertragung zwischen einer An- und einer Abtriebswelle sind in einer Vielzahl von Ausführungen und Funktionen bekannt. Die Antriebswelle ist dabei wenigstens mittelbar mit einer Antriebseinheit und die Abtriebswelle ist wenigstens mittelbar mit wenigstens einer anzutreibenden Baugruppe, vorzgsweise in Form eines Getriebes, koppelbar.

Die hydrodynamischen Kupplungen sind entsprechend ihres Einsatzzweckes gestaltet. Sie finden Verwendung in Getrieben, des weiteren können diese Kupplungen auch als separate Drehmomentenübertragungseinrichtung in Anstriebssträngen verwendet werden. Im letztgenannten Fall weist die Kupplung dazu in der Regel ein eigenes Gehäuse auf. Derartige Kupplungen sind beispielsweise aus den Voith-Drucken cr135, cr112 und cr252d bekannt. Diese Kupplungen umfassen wenigstens jeweils ein Primär- und ein Sekundärschaufelrad, welche wenigstens einen torusförmigen Arbeitsraum miteinander bilden. Im Falle der Ausbildung als Doppelkupplung sind zwei torusförmige Arbeitsräume vorhanden. Primärrad und Sekundärrad werden dann von jeweils zwei Schaufelrädern gebildet. Die beiden Primärschaufelräder sind dabei über ein zylindrisch gestaltetes Zwischenelement drehfest miteinander verbunden. Beide - Primärrad und Sekundärrad - sind in der Regel fremdgelagert. Für den Einsatzzweck im Bergbau sind Primärrad und Sekundärrad, wo es möglich ist, eingelagert.

Fremdlagerung bedeutet, daß das Primärrad sich über eine mit der Antriebswelle drehfest verbindbare Nabe und das Sekundärrad über eine mit der Abtriebswelle drehfest verbindbare Nabe auf den jeweiligen Wellen abstützt. Die Nabe selbst besteht dabei im wesentlichen aus einem hülsenförmig gestalteten Element, welches in axialer Richtung im einfachsten Fall mittels Schraubverbindung gegen axiale Verschiebung gesichert ist. Die hydrodynamische Kupplung umfaßt ferner ein Gehäuse, welches zwei axiale Stirnwände aufweist. Die axialen Stirnwände überdecken wenigstens einen Teil der Abmessung des Gehäuses in radialer Richtung. Die Naben erstrecken sich dabei in Einbaulage der hydrodynamischen Kupplung im wesentlichen bis in den Bereich der axialen Stirnwände. Derartige Kupplungen können des weiteren Mittel umfassen, um das Betriebsmittel während des Betriebes der hydrodynamischen Kupplung zu kühlen. Zu diesem Zweck kann das erwärmte Betriebsfluid über Düsen am Umfang des Primärrades abfließen. Das erwärmte Betriebsfluid wird dabei in einer dem Primärrad zugeordneten Schale aufgefangen. Diese Schale ist ebenfalls drehfest mit dem Primärrad gekoppelt. Ein gegen die Drehrichtung stehendes Staurohr, welches in die Schale hineinreicht, nimmt das erwärmte Betriebsfluid auf. Die Strömungsenergie der Flüssigkeit reicht dabei aus, um sie durch einen Kühler wieder in die Kupplung einzuspeisen. Bei derartig gestalteten Kupplungen besteht insbesondere die Schwierigkeit, diese als komplett vormontierte Baueinheiten in Kraftübertragungseinrichtungen zum Einsatz zu bringen und des weiteren eine einfache Montage der an- bzw. abtriebsseitigen Bauelemente zu gewährleisten. Vor allem bei (fremd- oder eigengelagerten) Ausführungen mit zwei torusförmigen Arbeitsräumen besteht die Notwendigkeit, die Kupplungsbaueinheit hinsichtlich ihrer Einzelteile nacheinander zu montieren.

Der Erfindung liegt daher die Aufgabe zugrunde, die Nachteile im Stand der Technik zu vermeiden. Insbesondere soll es ermöglicht werden, eine komplett vormontierte Kupplungsbaueinheit, insbesondere eine Kupplungsbaueinheit mit zusätzlichen Einrichtungen, wie beispielsweise Stau- oder Schöpfrohr, als komplett vormontierte Baueinheit bereitzustellen und somit auf einfache Art und Weise in einer Kraftübertragungseinheit zu integrieren und bei Störungen leicht auszuwechseln. Der konstruktive und bauteilmäßige Aufwand sowie die Kosten sollen dabei gering gehalten werden.

Die erfindungsgemäße Lösung der Aufgabe ist durch die Merkmale der Ansprüche 1 und 12 gekennzeichnet. Vorteilhafte Ausgestaltungen sind jeweils in den Unteransprüchen wiedergegeben.

Erfindungsgemäß weist die Kraftübertragungseinheit mit einer wenigstens mittelbar mit einer Antriebsmaschine koppelbaren Antriebswelle, einer Abtriebswelle und einer hydrodynamischen Kupplungsbaueinheit, umfassend wenigstens zwei Schaufelräder, welche über drehfest mit der An- bzw. Abtriebswelle verbundenen nabenartigen Elementen auf diesen gelagert sind, zwischen wenigstens einem Schaufelrad und dem dazugehörigen nabenartigen Element eine Zwischennabe auf. Die Zwischennabe ist mit dem Schaufelrad drehfest koppelbar und erstreckt sich vom Schaufelrad in axialer Richtung wenigstens bis unmittelbar über die axialen Stirnwände hinaus. Es sind erste Mittel vorgesehen, mittels welcher im unmontierten Zustand der Kupplungsbaueinheit in der Kraftübertragungseinheit die Zwischennabe am Gehäuse lösbar befestigt ist. Das nabenartige Element bildet wenigstens einen axialen Anschlag für die Zwischennabe im montierten Zustand. Es sind weitere zweite Mittel vorgesehen, welche im montierten Zustand die Zwischennabe mit dem nabenartigen Element im Bereich des Endes der mit dieser drehfest verbundenen Welle drehfest verbinden.

Vorzugsweise ist die Zwischennabe zwischen Primärrad und dem mit der Antriebswelle drehfest verbundenen nabenartigen Element angeordnet. Die erfindungegemäße Lösung ermöglicht es, daß die Wellen, inbesondere die Antriebswelle nicht mehr bis ins Gehäuse hineinreichen und die bisherige aufwendige Realisierung einer drehfesten Verbindung zwischen Primärrad und Antriebswelle über die Nabe entfallen kann. Die drehfeste Verbindung erfolgt außerhalb des Kupplungsgehäuses. Im einzelnen erlaubt die erfindungsgemäße Lösung die komplette Kupplungsbaueinheit einschließlich dem Antriebsläufer antriebsseitig an ein Getriebe anzuflanschen. Antriebsseitig kann dann eine Antriebsmaschine, welche beispielsweise als Elektromotor ausgeführt sein kann, einfach montiert und demontriert werden.

Die Zwischennabe umfaßt ein erstes rotationssymetrisches Element, beispielsweise in Form eines Rohres, und einen flanschartigen Endbereich. Der flanschartige Endbereich ist in axialer Richtung außerhalb der axialen Stirnwand des Gehäuses angeordnet und die Verbindung mit dem Gehäuse erfolgt über Befestigungselemente, vorzugsweise in Form von Schraubverbindungen.

Das nabenartige Element ist immer in wenigstens zwei Bereiche unterteilbar - einen ersten Bereich und einen zweiten Bereich. Der erste Bereich umfaßt dabei Mittel zur drehfesten Verbindung des nabenartigen Elementes mit der Welle.

Im zweiten Bereich ist ein axialer Anschlag für die Zwischennabe ausgebildet. Der axiale Anschlag kann dabei von wenigstens einem Teil einer zur Kupplungsbaueinheit weisenden Stirnfläche im zweiten Bereich gebildet sein, an welcher die Zwischennabe mit einem Teil einer zur Antriebsmaschine weisenden Stirnfläche anlegbar ist. Denkbar ist jedoch auch eine Ausbildung des Anschlages durch eine, an der zur Kupplungsbaueinheit weisenden Stirnfläche im zweiten Bereich des nabenartigen Elementes in Richtung zur Antriebsmaschine vorgesehene Ausnehmung. Die durch die Ausnehmung gebildeten, im wesentlichen parallel zur An- bzw. Abtriebswelle verlaufenden Flächen bilden dann zusätzlich einen Anschlag für die Zwischennabe in radialer Richtung. Die Zwischenabe weist dazu einen zur Ausnehmung komplementären Vorsprung auf, welcher in Einbaulage ebenfalls in Richtung der Antriebsmaschine gerichtet ist. Die Ausnehmung erstreckt sich vorzugsweise von einem Durchmesser, welcher kleiner dem Außendurchmesser des nabenartigen Elementes im zweiten Bereich ist, bis zum Außenumfang des nabenartigen Elementes im zweiten Bereich.

Im zweiten Bereich erfolgt vorzugsweise auch die Realsierung der drehfesten Verbindung von Zwischennabe und nabenartigen Element. Diese wird vorzugsweise über Verbindungselemente ausgeführt, beispielsweise in Form von Schraubverbindungen. Vorzugsweise sind die Befestigungselemente und die Verbindungselemente zur drehfesten Verbindung von Zwischennabe und nabenartigen Element nach Typ und Größe gleich ausgelegt. Dies ermöglicht eine Nutzung der zur Befestigung der Zwischennabe im unmontierten Zustand an der Gehäusewand verwendeten Verbindungselemente zur drehfesten Verbindung, d.h. es ist während der Montage lediglich ein Umstecken der Verbindungselemente erforderlich. Der zweite Bereich des nabenartigen Elementes ist dazu vorzugsweise als ein im wesentlichen scheibenförmiges Element ausgeführt. Das scheibenförmge Element grenzt mit wenigstens einem Teil seiner Fläche an die zur Kupplungseinheit weisende Stirnseite der Welle.

Das nabenartige Element kann des weiteren einen dritten Bereich umfassen. Der dritte Bereich ist dann als ringförmiges Element ausgebildet, wobei der Außendurchmesser im dritten Bereich geringer als der Innendurchmesser der Zwischennabe ist. Es sind Mittel zur Vorzentrierung zwischen nabenartigen Element und Zwischennabe vorgesehen. Das Mittel wird dabei von wenigstens einem am Innendurchmesser der Zwischennabe angeordneten Vorsprung gebildet, dessen kleinster Innendurchmesser größer als der Außendurchmesser des nabenartigen Elementes im dritten Bereich ist.

Eine derartige Vorzentrierung ermöglicht eine leichte Zuordnung zwischen dem Primärrad und der mit der Antriebswelle drehfest verbundenen Nabe während des Montagevorganges.

Vorzugsweise weist die Kupplungsbaueinheit auch eine Einrichtung zur Zentrierung der Zwischennabe in radialer und/oder axialer Richtung im Gehäuse auf. Die Einrichtung wird von einem am Gehäuse befestigbaren, wenigstens einen Innendurchmesser aufweisenden Element, welches die Zwischennabe umschließt gebildet. Das Element selbst ist zwischen Schaufelrad und axialer Stirnwand angeordnet. Die Einrichtung zur axialen und/oder radialen Zentrierung der Zwischennabe weist des weiteren im Bereich von deren Innendurchmesser Vorsprünge auf. An der Zwischennabe sind an deren Außendurchmesser dazu komplementäre Vorsprünge ausgebildet. Die Vorsprünge sind derart ausgeführt, daß bei einer Bewegung der Zwischennabe in axialer Richtung die Vorsprünge am Innendurchmesser der Einrichtung wenigstens einen Anschlag bilden. Ein weiterer Anschlag für die Zwischennabe kann an der axialen Stirnwand des Gehäuses vorgesehen sein. Die Einrichtung ist vorzugsweise direkt an der Gehäusestimwand befestigt.

Vorzugsweise ist des weiteren das Gehäuse auf der Seite der Zwischennabe in axialer Richtung von der axialen Gehäusestimwand weggerichtet tunnelartig verlängert ausgeführt. Dies ermöglicht ein Umschließen der Verbindungsstelle zwischen Zwischennabe, nabenartigen Element und Antriebswelle. Die Verlängerung weist vorzugsweise einen flanschartig gestalteten Endbereich auf. In diesem sind Durchgangslöcher oder Gewinde zur Aufnahme von Verbindungselementen zur Befestigung an einem Gehäuse der benachbarten Elemente, vorzugsweise dem Gehäuse der Antriebsmaschine, beispielsweise eines Elektromotors, vorgesehen. In der Verlängerung des Gehäuses können auch Einrichtungen zur Realsierung eines Austausches von Beriebsfluid, insbesondere erwärmten Betriebsfluid während des Betriebes, angeordnet werden. Beispeilsweise kann ein Schöpfrohr über diese Verlängerung durch die axialen Stirnwände geführt werden.

Die erfindungsgemäße Ausführung eignet sich besonders für Doppelkupplungen, d.h. Kupplungen mit zwei torusförmigen Arbeitskreisläufen. Auch besteht die Möglichkeit, die Zwischennabe zwischen Sekundärrad und dem mit der Abtriebswelle drehfest verbundenen nabenartigen Element vorzusehen. Als Primärrad wird immer das Pumpenrad und als Sekundärrad das Turbinenrad bezeichnet. Die Zwischennabe muß nicht als separates Bauteil ausgeführt sein, sondern es besteht auch die Möglichkeit, diese zusammen mit dem Schaufelrad in einem Bauteil auszuführen.

Die hydrodynamische Kupplungsbaueinheit kann erfindungsgemäß bereits vormontiert sein. Diese dient dem Einsatz in Kraftübertragungseinheiten, wobei das Primärschaufelrad wenigstens mittelbar mit der Antriebsseite, vorzugsweise der Antriebsmaschine, und das Sekundärschaufelrad mit der Abtriebsseite, in der Regel einem Verbraucher oder einer Drehmomentenwandlungseinheit koppelbar ist. Die Kupplungsbaueinheit umfaßt ferner ein Gehäuse, welches zwei axiale Stirnwände aufweist. Die Stirnwände erstrecken sich dabei in radialer Richtung wenigstens über einen Teil der Abmessungen des Gehäuses. Wenigstens einem der Schaufelräder, vorzugsweise dem Primärschaufelrad, ist zur drehfesten Verbindung eines mit der Antriebswelle drehfest verbundenen nabenartigen Elementes eine Zwischennabe zugeordnet. Dies bedeutet, daß die Zwischennabe nicht unmittelbar mit den anzuschließenden Bauteilen bzw. Bauelementen koppelbar ist, sondern mit dem mit der Antriebswelle drehfest verbundenen nabenartigen Element drehfest verbindbar ist. Die Zwischennabe erstreckt sich dabei in axialer Richtung im wesentlichen von der Verbindungsstelle mit dem Schaufelrad bzw. den Schaufelrädern bis wenigstens unmittelbar über die axiale Stirnwand des Gehäuses hinaus. In der vormontierten, noch nicht eingebauten Kupplungsbaueinheit, ist diese Zwischennabe lösbar mit dem Gehäuse verbunden. Vorzugsweise ist dazu die Zwischennabe als rotationssymetrisches Element mit einem flanschartig gestalteten Endbereich ausgeführt. Dieser flanschartig gestaltete Endbereich ist dabei außerhalb des Kupplungsgehäuses angeordnet. Die lösbare Verbindung wird vorzugsweise mittels Schraubverbindungen realisiert. Im flanschartig gestalteten Endbereich sind dazu entweder Durchgangslöcher oder aber Gewindebohrungen vorgesehen. Das gleiche gilt für das Gehäuse bzw. die axialen Stirnwände des Gehäuses. Des weiteren ist im Bereich der axialen Stirnwände eine Einrichtung vorgesehen, welche es ermöglicht, die Zwischennabe im nicht montierten Zustand in axialer und/oder radialer Richtung zu fixieren. Vorzugweise wird zu diesem Zweck ein ringförmiges Element gestellfest an der Gehäusestirnwand angeordnet. Dieses ringförmige Element umschließt die Zwischennabe. Zur Zentrierung sind dabei sowohl an der Zwischennabe als auch dem ringförmig gestalteten Element entsprechende Ausnehmungen und Vorsprünge vorgesehen. Diese sind derart gestaltet und zueinander angeordnet, daß ein entsprechendes Spiel in axialer und/oder radialer Richtung einstellbar ist. Des weiteren sind an der Zwischennabe erfindungsgemäß im Endbereich Mittel vorgesehen, die eine Verbindung mit dem mit der Antriebswelle oder aber einer anzutreibenden Welle drehfest verbundenen nabenartigen Element ermöglichen. Vorzugsweise erfolgt die drehfeste Verbindung der Zwischennabe mit der entsprechenden mit der Antriebswelle - oder einer anzutreibenden Welle - zu verbindenden nabenartigen Element ebenfalls mittels Schraubverbindungen. Vorzugsweise weisen die dazu erforderlichen Durchgangslöcher bzw. Gewindebohrungen in diesem Fall gleiche Abmessungen auf. Dadurch ist es möglich, für die Verbindung zwischen Zwischennabe und Kupplungsgehäuse im nicht montierten Zustand der Kupplungsbaueinheit und für die Verbindung zwischen Zwischennabe und Nabe in montiertem Zustand bei Integration der Kupplungsbaueinheit in eine Kraftübertragungseinheit die gleichen Verbindungselemente zu nutzen. Die erfindungsgemäße vormontierte Kupplungsbaueinheit kann in einfacher Weise in eine Kraftübertragungseinheit integriert werden. Insbesondere ist es möglich, zusätzliche Funktionselemente vorzusehen, welche ebenfalls komplett vormontiert in der Kupplungsbaueinheit zu Einsatz kommen. Dazu gehören beispielsweise das Vorsehen eines Stau- oder Schöpfrohres, welches in einem mit dem Primärrad verbundene Kupplungsschale oder -rinne eingreift. Im einzelnen kann die Ausführung mit Zwischennabe sowohl am Primär- als auch Sekundärschaufelrad erfolgen.

Zur Integration in eine Kraftübertragungseinheit ist lediglich ein nabenartiges Element, welches mit der An- bzw. Abtriebswelle drehfest verbunden ist, erforderlich. Dieses nabenartige Element ist dabei drehfest mit der Antriebsoder anzutreibenden Welle verbunden. Die Zwischennabe, die beispielsweise während des Transportes mit dem Gehäuse, insbesondere der axialen Stirnwand des Gehäuses, verbunden ist und in der axialen Stirnwand sowie dem ringförmigen Element zentriert ist, kann nach dem Lösen der Verbindung mit dem Gehäuse axial in Richtung der Antriebsmaschine oder der anzutreibenden Maschine verschoben werden. Dies hängt im einzelnen davon ab, ob lediglich dem Primärschaufelrad oder dem Sekundärschaufelrad oder aber beiden Schaufelrädern eine derartige Zwischennabe zugeordnet ist. Bei Zuordnung der Zwischennabe zum Primärschaufelrad kann diese nach dem Lösen der Verbindung mit dem Gehäuse axial in Richtung der Antriebsmaschine verschoben werden. Die Anbindung der Antriebsmaschine erfolgt dabei wie folgt: Das nabenartige Element wird auf die Antriebswelle der Antriebsmaschine aufgezogen und mittels wenigstens einem Verbindungselement in axialer Richtung axial gesichert. Vorzugsweise erfolgt diese axiale Sicherung mittels lösbarer Schraubverbindungen. Die drehfeste Verbindung zwischen dem nabenartigen Element und der Antriebswelle der Antriebsmaschine wird beispielsweise mittels einer Paßfederverbindung oder Keilwellenverbindung realisiert. Das nabenartige Element selbst umfaßt wenigstens zwei ringförmig gestaltete Elemente, welche mittels einer Zwischenscheibe miteinander verbunden sind. Ein erstes ringförmiges Element dient dabei zur drehfesten Verbindung mit der Antriebswelle der Antriebsmaschine. Das zweite ringförmige Element dient zur Lagefixierung der Kupplungsbaueinheit gegenüber der Antriebsmaschine. Während das erste ringförmige Element vorzugsweise der Realisierung der drehfesten Verbindung zwischen Nabe und Antriebswelle der Antriebsmaschine dient, übernimmt die Zwischenscheibe vorzugsweise die Funktion der Verbindung zwischen nabenartigen Element und Zwischennabe. Die Zwischenscheibe ist in einem bevorzugten Ausführungsbeispiel ebenfalls flanschartig ausgeführt, und bildet einen Anschlag für die Zwischennabe. Des weiteren dient die Zwischenscheibe der Aufnahme der Verbindungselemente zur Realisierung der Verbindung zwischen nabenartigen Element und Zwischennabe. Diese wird vorzugsweise mittels Schraubverbindungen realisiert. Die Zwischenscheibe weist dazu entweder Durchgangslöcher oder aber Gewindebohrungen auf. Zum Zwecke der Lagefixierung der Kupplungsbaueinheit gegenüber der Antriebsmaschine weist das nabenartige Element vorzugsweise über seine gesamte Länge, d.h. Erstreckung in axialer Richtung, einen geringeren Außendurchmesser als der Innendurchmesser der Zwischennabe auf. Andererseits ist es auch denkbar, daß diese Fixierung durch eine entsprechende Gestaltung des ringförmigen Elementes über einen Teilbereich mit größerem Innendurchmesser als dem kleinsten Außendurchmesser der Zwischennabe realisiert wird. In diesem Fall gestaltet sich jedoch die Ausführung der Zwischennabe komplizierter, da die Zwischennabe im Innenraum ein weiteres ringförmiges Element aufweisen müßte, dessen Außendurchmesser kleiner als der Innendurchmesser des nabenartigen Elementes im dritten Bereich ist. In der Zwischennabe ist somit ein rohrförmiges Element geringeren Durchmessers vorzusehen.

Zur sogenannten Vorzentrierung sind des weiteren am Innenumfang der Zwischennabe bzw. im letztgenannten Fall am Außenumfang der Zwischennabe oder aber am Außenumfang des zweiten ringförmigen Elementes des nabenartigen Elementes Vorsprünge vorgesehen. Die Antriebsmaschine mit aufgezogenem nabenartigen Element wird dazu beispielsweise an die Kupplungsbaueinheit herangefahren und über diese Vorzentrierung vorjustiert. Die lösbare Verbindung zwischen Zwischennabe und Gehäuse bzw. axialer Stirnwand wird gelöst, und die Zwischennabe wird in axialer Richtung gegenüber dem nabenartigen Element in eine Position verbracht, in der der flanschartig gestaltete Endbereich an der Zwischenscheibe des nabenartigen Elementes zum Anliegen kommt. Ist dieser Anschlag erreicht, wird die drehfeste Verbindung zwischen nabenartigen Element und Zwischennabe ausgeführt. Vorzugsweise werden dazu die gleichen Verbindungselemente benutzt wie bei der Verbindung zwischen Zwischennabe und Gehäuse. Im einzelnen entsteht aufgrund der Gestaltung von Zwischennabe, der Einrichtung zur axialen und/oder radialen Zentrierung der Zwischennabe sowie des nabenartigen Elementes durch die axiale Bewegung der Zwischennabe während des Zusammenbaues in Richtung der Antriebsmaschine ein radiales und axiales Spiel.

Das Kupplungsgehäuse weist vorzugsweise in Richtung der Antriebsmaschine eine tunnelartig gestaltete Verlängerung auf. Diese Verlängerung kann bereits ebenfalls vormontiert werden. Diese erstreckt sich in axialer Richtung im eingebauten Zustand über die axiale Erstreckung des nabenartigen Elementes hinaus. Nach dem vollständigen Zusammenfahren von Kupplungsbaueinheit und Antriebsmaschine wird die tunnelartige Verlängerung mit dem Gehäuse der Antriebsmaschine verbunden.

Die erfindungsgemäße Lösung ist sowohl für die Anwendung am Primär- als auch am Sekundärschaufelrad geeignet, d.h. für die Verbindung mit der Antriebswelle, beispielsweise der Antriebsmaschine und/oder der Abtriebswelle, beispielsweise der Getriebeeingangswelle.
Die erfindungsgemäße Lösung wird nachfolgend anhand von Figuren erläutert. Darin ist folgendes dargestellt:
- Fig. 1: zeigt anhand eines Ausschnittes einer Kraftübertragungseinheit in einem Axialschnitt eine hydrodynamische Kupplungseinheit, welche mit einer Antriebswelle gekoppelt ist;
- Fig. 2: zeigt eine Einzelheit 1 entsprechend der Fig. 1.

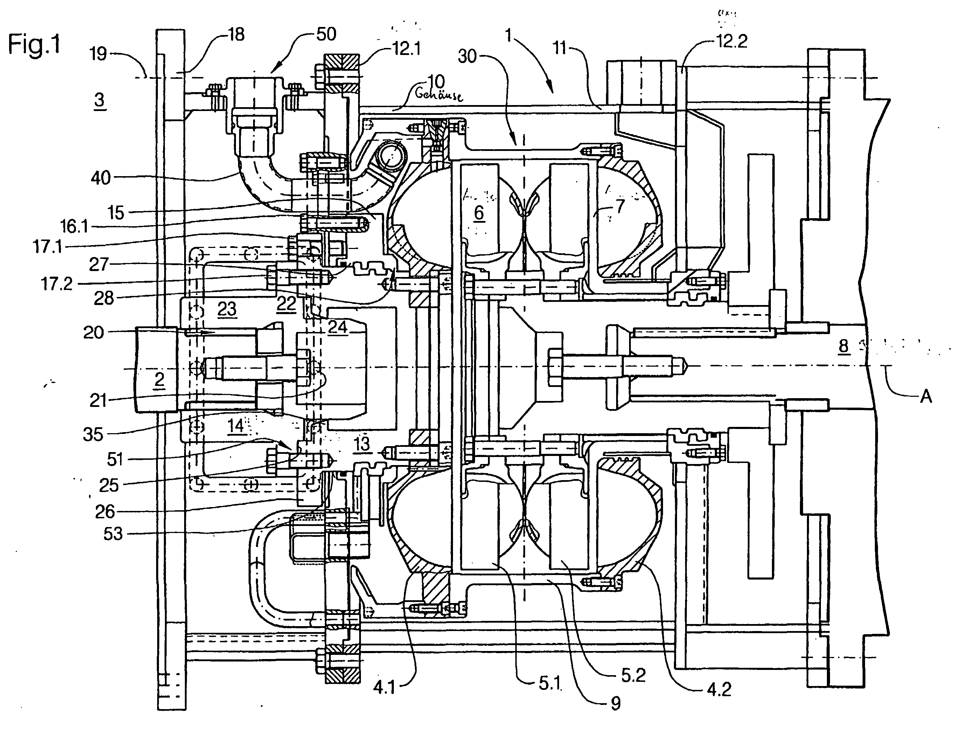

Die Figur 1 verdeutlicht in einem Ausschnitt einer Kraftübertragungseinheit in einem Axialschnitt eine hydrodynamische Kupplungsbaueinheit 1 in Einbaulage bei Kopplung mit einer Antriebswelle 2 einer hier im einzelnen nicht dargestellten Antriebsmaschine 3. Die hydrodynamische Kupplungsbaueinheit 1 umfaßt eine Kupplungseinheit 30 mit wenigstens einem Primärrad 4 und einem Sekundärrad 5. Die Kupplungseinheit 30 ist hier als Doppelkupplung ausgebildet, d. h. diese weist jeweils zwei torusförmige Arbeitsräume auf - einen ersten Arbeitsraum 6 und einen zweiten Arbeitsraum 7. Der erste toroidale Arbeitsraum 6 wird dabei von einem ersten Primärschaufelrad 4.1 und einem ersten Sekundärschaufelrad 5.1 gebildet. Der zweite toroidale Arbeitsraum 7 wird von einem zweiten Primärschaufelrad 4.2 und einem zweiten Sekundärschaufelrad 5.2 gebildet. Die beiden Primärschaufelräder 4.1 und 4.2 werden dabei wenigstens mittelbar von der Antriebswelle 2 der hier im einzelnen nicht dargestellten Antriebsmaschine 3 angetrieben. Die beiden Sekundärschaufelräder 5.1 bzw. 5.2 sind mit einer Abtriebswelle 8 drehfest verbunden. Die beiden Primärschaufelräder 4.1 und 4.2 sind durch einen Zylinderabschnitt 9 drehfest miteinander verbunden.

Die hydrodynamische Kupplungsbaueinheit 1 weist ein Gehäuse 10 auf. Dieses umfaßt eine zur Kupplungsachse A im wesentlichen konzentrische Umfangswand 11 sowie zwei im wesentlichen scheibenförmige Stirnwände 12.1 und 12.2, die sich in radialer Richtung über wenigstens einen Teil der radialen Abmessung des Gehäuses 10 erstrecken.

Das Primärrad 4 bzw. das erste Primärschaufelrad 4.1 ist über eine Zwischennabe 13 mit einer drehfest mit der Antriebswelle 2 der Antriebsmaschine 3 verbundenen Nabe 14 gekoppelt. Desweiteren ist ein ringförmig gestaltetes Bauteil 15 vorgesehen, welches mit der Wand des Gehäuses, insbesondere mit der Stirnwand 12.1, mittels Schraubverbindung 16 verbunden ist. Die Zwischennabe 13 ist über Befestigungsmittel, beispielsweise über Schraubverbindungen, hier 17.1 und 17.2, mit dem Gehäuse bzw. der Stirnwand 12.1 und der Nabe 14 verbindbar.

Zur Befestigung des Kupplungsgehäuses 10 an der Antriebsmaschine, insbesondere am Elektromotor, ist ein Flansch 18 vorgesehen. Dieser Flansch 18 ist mittels einer Schraubverbindung 19 am Gehäuse der Antriebsmaschine befestigbar. Der Flansch 18 schließt sich dabei an eine in axialer Richtung tunnelartige Verlängerung 50 des Gehäuses 10 an. Diese tunnelartige Verlängerung 50 erstreckt sich in axialer Richtung in montiertem Zustand der Kupplungsbaueinheit 1 vorzugsweise bis in den Bereich der Verbindung der Nabe 13 mit der Antriebswelle 2.

Die Nabe 14 ist drehfest mit der Antriebswelle 2 der Antriebsmaschine 3 verbindbar. Diese Verbindung kann beispielsweise wie hier dargestellt mittels einer Paßfederverbindung 20 realisiert werden. Die Nabe 14 ist buchsenartig ausgeführt, diese besteht im wesentlichen aus zwei mittels einer Trennscheibe 22 miteinander verbundenen ringförmigen Elementen - einem ersten ringförmigen Element 23 und einem zweiten ringförmigen Element 24. Die Nabe 14 ist, wie hier beispielsweise dargestellt, mittels einer Schraubverbindung 21 in axialer Richtung gegenüber der Antriebswelle 2 fixierbar. Die Zwischenscheibe 22 ist dabei derart ausgeführt, daß diese einen Flansch 51 zur Aufnahme der Verbindungselemente zur Kopplung mit der Zwischennabe 13 bildet. Des weiteren ist die Zwischenscheibe 22 im Übergang zum zweiten ringförmigen Element 24 derart gestaltet, daß diese einen Anschlag für einen Teil der äußeren Umgrenzung der Zwischennabe 13 bildet. Dieser Anschlag ist hier mit 25 bezeichnet. Das zweite ringförmige Element weist gegenüber dem kleinsten Innendurchmesser d_{iZN} der Zwischennabe 13 im Bereich des Umschließens der Nabe 14 einen kleineren Außendurchmesser d_{AN} auf. Der kleinste Innendurchmesser d_{izn} wird dabei durch die Gestaltung eines in Richtung der Symmetrieachse S gerichteten Vorsprunges 35 gebildet. Dieser Vorsprung 35 ist dabei in axialer Richtung betrachtet im Endbereich der Zwischennabe 13, vorzugsweise im Bereich des flanschartig gestalteten Endes 26 der Zwischennabe angeordnet. Dieses zweite ringförmige Element 24 der Nabe 14 dient dabei im Zusammenwirken mit der Zwischennabe 13 zur Vorzentrierung.

Auch die Zwischennabe 13 ist im wesentlichen buchsenartig ausgestaltet. Ihr in Einbaulage in Richtung der Antriebsmaschine weisendes Ende 26 ist ebenfalls flanschenartig ausgeführt. Dieser Flansch ist derart gestaltet, daß dieser am Anschlag 25 der Nabe 14 zum Anliegen gebracht werden kann. Des weiteren ist die Zwischennabe 13 an ihrem Außenumfang 53 im Bereich vor dem flanschartig gestalteten Ende 26 derart ausgeführt, daß dieses wenigstens zwei Passungen mit dem ringförmig gestaltete Bauteil 15 bildet. Im dargestellten Beispiel sind dies die Passungen 27 und 28.

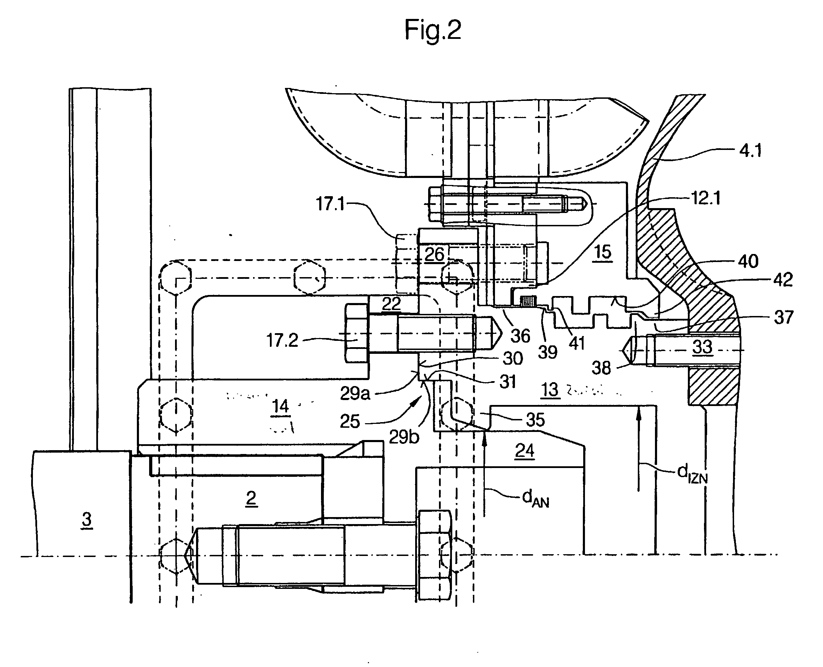

Im eingebauten Zustand ist die Zwischennabe 13 gegenüber der auf der Antriebswelle 2 drehfest gelagerten Nabe 14 derart in axialer Richtung verschoben, daß wie im einzelnen im Fig. 2 in einer Einzelheit dargestellt, das flanschartig ausgeführte Ende 26 der Zwischennabe 13 mit den Flächen 29a und 29b, an der einen Flansch bildenden Zwischenscheibe 22 an den Flächen 30 und 31 zum Anliegen kommt. Der stufenartige Übergang von der Zwischenscheibe 22 zum zweiten ringförmigen Element 24 der Nabe 14 wird auch als Anschlag 25 bezeichnet. Die Befestigung in axialer sowie radialer Richtung erfolgt hier mittels der Schraubverbindung 17.2. Im eingebauten Zustand ist die Schraubverbindung 17.1 gelöst, d. h. es besteht keine Verbindung bzw. Befestigung der Zwischennabe 13 mit der Stirnwand 12.1.

Im demontierten Zustand, d.h. vor dem Einbau, liegt die Kupplungsbaueinheit 1 in einer Form vor, in welcher mittels einer Schraubverbindung 33 das erste Primärschaufelrad 4.1 mit der Zwischennabe 13 drehfest verbunden ist. Die Zwischennabe 13 ist desweiteren über die Schraubverbindung 17.1 an der Stirnwand 12.1 befestigt. Die Zwischennabe 13 erstreckt sich dazu in axialer Richtung über die Stirnwand 12.1 hinaus. Im Bereich des vorzugsweise flanschartig gestalteten Endes 26 sind Möglichkeiten zur Realisierung einer lösbaren Verbindung mit der Stirnwand 12.1 vorgesehen. Vorzugsweise erfolgt die Verbindung dabei mittels Schrauben 17.1.

Des weiteren ist die Kupplungseinheit 30 im vormontierten Zustand in axialer und radialer Richtung wenigstens durch die Stirnwand 12.1 zentriert. Vorzugsweise ist ein mit der Stirnwand 12.1 gestellfest verbundenes ringförmiges Bauelement 15 vorgesehen.

Im nicht eingebauten Zustand bildet diese oben beschriebene Baugruppe die vormontierte Kupplungsbaueinheit 1.

Weiterer Bestandteil dieser vormontierten Kupplungsbaueinheit kann ein zum Zwecke der Verbindung des Kupplungsgehäuses 10 mit einem Gehäuse der Antriebsmaschine 3 ausgebildeter Flansch 18 sein, welcher sich an die Stirnwand 12.1 anschließt, wobei zwischen dem Flansch 18 und der Stirnwand 12.1 eine tunnenartig ausgeführte Verlängerung 50 in Form einer im wesentlichen zylindrischen Röhre vorgesehen ist.

Für den Einbau in einem Antriebsstrang, insbesondere der Kopplung zwischen hydrodynamischer Kupplung und der Antriebsmaschine 3, welche beispielsweise als Elektromotor ausgeführt sein kann, wird zuerst die Nabe 14 auf die Antriebswelle 2 aufgezogen. Die Nabe 14 wird dann in axialer Richtung gegenüber der Antriebswelle fixiert. Die vormontierte Kupplungsbaueinheit 1 wird dann derart gegenüber der Nabe 14, insbesondere dem zweiten ringförmigen Element 24 der Nabe 14 in Position gebracht, daß die buchsenartig ausgestaltete Zwischennabe 13, welche einen größeren Innendurchmesser d_{izn} als der Außendurchmesser d_{AN} aufweist, der Nabe 14 bzw. das zweite ringförmige Element 24 der Nabe 14 zum Teil umschließt.

Die Zwischennabe 13 weist an ihrem Innenumfang, d. h. dem Innendurchmesser d_{iZN} einen vorzugsweise ringförmig verlaufenden Vorsprung 35 auf, welcher im wesentlichen der Aufgabe der Vorzentrierung zwischen den beiden Elementen Nabe 14 und Zwischennabe 13 dient. Eine Ausführung mit einer Vielzahl über den Umfang verteilter einzelner, sich jeweils über einen geringen Teil des Umfanges am Innendurchmesser d_{izn} der Zwischennabe 13 erstreckenden Vorsprüngen, ist ebenfalls denkbar. Die Antriebsmaschine 3 wird dabei an die Kupplungsbaueinheit herangefahren und über diese Vorzentrierung vorjustiert. Die Antriebsmaschine 3 wird nach dem vollständigen Zusammenfahren durch die Schraubverbindungen 19 mit dem Flansch 18 der Kupplungsbaueinheit verbunden. Danach werden die Schraubverbindungen 17.1, welche die Zwischennabe 13 mit der Stirnwand 12.1 verbinden bzw. diese an der Stirnwand 12.1 befestigen, gelöst und werden durch die in der Nabe 14, insbesondere der Zwischenscheibe 22 vorgesehenen Durchgangslöcher in die Zwischennabe eingeschraubt. Diese Schraubverbindung ist mit 17.2 bezeichnet. Es handelt sich vorzugsweise dabei um die gleiche Größe wie für die Verbindung zwischen Zwischennabe 13 und Stimwand 12.1, so daß diese gleichen Schrauben nach dem Lösen für die Verbindung zwischen Nabe 14 und zwischen Nabe 13 wieder genutzt werden können. Durch das Anziehen der Schraubverbindung 17.2 wird die Zwischennabe 13 und die mit dieser verbundenen Teile, insbesondere das Primärrad 4.1 der hydrodynamischen Kupplungsbaueinheit 1 in Richtung der Antriebsmaschine 3 bewegt. Durch die axiale Bewegung der Zwischennabe 13 in Richtung der Antriebsmaschine 3 entsteht zwischen der Zwischennabe 13 und der Stimwand 12.1 und dem mit dem Gehäuse, d. h. der Stirnwand 12.1, fest verbundenen ringförmigen Bauelement 15 im Bereich der Passungen 36 und 37 radiales und axiales Spiel. Beim Anstoßen der Zwischennabe 13 mit ihrer Fläche 29a an die Fläche 30 der Nabe 14 werden die Schraubverbindungen 17.2 mit einem definierten Anzugsmoment angezogen, so daß nun von der Antriebsmaschine 3 Drehmomente über die Antriebswelle 2, die Nabe 14, die Zwischennabe 13 in die Kupplung, d. h. das Primärrad 4 eingeleitet werden können.

Im noch nicht eingebauten Zustand der Kupplungsbaueinheit 1 ist die Zwischennabe 13 mittels der Schraubverbindungen 17.1 an der Stirnwand 12.1 befestigt. In axialer Richtung nimmt die Zwischennabe 13 gegenüber dem ringförmigen Bauteil 15 eine derartige Lage ein, daß das Bauteil 15 in radialer und evtl. in axialer Richtung einen Anschlag für die Zwischennabe 13 bildet. Insbesondere sind dazu die am Außenumfang der Zwischennabe vorgesehenen Vorsprünge und Ausnehmungen, hier im einzelnen der Vorsprung 38 und die Ausnehmung 39 und die dazu am Innenumfang 40 des ringförmigen Bauelementes 15 komplementären Vorsprünge bzw. Ausnehmungen 41 und 42 vorgesehen. Diese können beim Ineinandergreifen jeweils einen Anschlag für die Beweglichkeit der Zwischennabe 13 und der mit dieser verbundenen Bauteile in radialer Richtung und evtl. bei entsprechender Gestaltung auch in axialer Richtung bilden.

Die Passungmengenverhältnisse insbesondere im Bereich der einzelnen Anschläge können entsprechend den Erfordernissen des Einbaus gestaltet werden. Im einzelnen kann beispielsweise durch das Lösen der Schraubverbindungen 17.1. an der noch nicht montierten Kupplungsbaueinheit 1 die Zwischennabe 13 axial in Richtung der Antriebsmaschine 3 bewegt werden. Nach einigen Millimetern axialer Bewegung kommen die Flächen 31 und 29b zum Aufeinanderliegen. Bei Weiterbewegung der Zwischennabe 13 in Richtung der Antriebsmaschine wird die Passung 37 inaktiv. Wiederum nach axialer Bewegung der Zwischennabe 13 in Richtung der Antriebsmaschine 3 wird auch die Passung 36 unwirksam. Einzig und allein die Flächen 29b der Zwischennabe 13 und 31 der Nabe 14 sind noch im Einsatz. Bei Weiterbewegung der Zwischennabe 13 in axialer, d. h. in Richtung der Antriebsmaschine 3, kommt es zum Anliegen der Flächen 30 der Nabe 14 und der Fläche 29a der Zwischennabe 13. Nur diese Flächen 30 und 31 stehen mit den Flächen 29a und 29b in Kontakt.

Die hier beschriebenen und im einzelnen in Figuren 1und 2 dargestellten Passungslängen sowie der Reihenfolge deren Deaktivierung und Aktivierung ist nur als Beispiel gedacht. Die Reihenfolge der Aktivierung und Deaktivierung kann variiert werden. Insbesondere ist es auch denkbar, daß die Gestaltung des Außenumfanges der Zwischennabe 13, des Innenumfanges der Zwischennabe 13, des Außenumfanges im Bereich der Anlagefläche der Zwischennabe 13 an der Nabe 14 und der Innendurchmesser der Stirnwand 12.1 sowie des mit diesem verbundenen Bauteiles 15 verschiedenartig ausgeführt wird. Wesentlich ist lediglich, daß bei Vorliegen der Kupplungsbaueinheit 1 im unmontierten Zustand die Zwischennabe an der Stirnwand 12.1 bzw. der Gehäusewand der hydrodynamischen Kupplungsbaueinheit 1 befestigt sowie in axialer Richtung bezüglich der Verschiebbarkeit in Richtung des Abtriebes fixierbar ist. Die Fixierung kann durch entsprechende Gestaltung der Gehäusewand erfolgen oder aber mittels eines mit dieser gestellfest verbundenen Bauteiles. Die konkrete Ausgestaltung der einzelnen Bauteile obliegt in diesem Fall dann dem Fachwissen des Durchschnittsfachmannes.

Um während der axialen Bewegung ein Verklemmen der Zwischennabe 13 zu verhindern, sind die einzelnen Passungen immer so gewählt, daß jeweils die Rundlaufabweichungen und die Durchmessertoleranzen auch aufnehmen können. Insbesondere sind die Passungen dann derart ausgeführt, daß sie die Summe der Toleranzen der einzelnen Bauteile aufnehmen können.

Die Figur 2 verdeulicht eine Einzelheit I einer Ausführung gemäß Figur 1a. Dabei wird deutlich, welche Befestigungsmöglichkeiten insbesondere welche Verbindungsmöglichkeit zwischen Nabe 14 und zwischen Nabe 13 bzw. zwischen Nabe 13 und Stirnwand 12.1 des Gehäuses vorgesehen werden müssen. Die Verbindungsmöglichkeiten bzw. die Befestigungsmöglichkeiten werden vorzugsweise durch Schraubverbindungen realisiert.

Die vorher beschriebene Lösung bezieht sich auf eine Ausführung einer Doppelkupplung, d. h. einer Kupplung mit zwei Arbeitskreisläufen. Diese kann zusätzlich auch bezüglich der Abtriebsseite fremd gelagert sein. Des weiteren ist es denkbar, diese Möglichkeit der Fremdlagerung des Primärschaufelrades 4 über die Zwischennabe auf deren mit der Antriebswelle drehfest verbundenen Nabe 14 bei einfachen einkreisläufigen hydrodynamischen Kupplungen vorzusehen. Insbesondere können derartige Baueinheiten, welche auch entsprechende Zusatzeinrichtungen aufweisen können, wie hier z. B. in Figur 1 ein stehendes Schöpfrohr 40, als vormontierte Kupplungsbaueinheiten verwendet werden. Ein wesentlicher Vorteil einer derartigen vormontierten Bauweise besteht im Einbaufall in einer Reduzierung des Montageaufwandes. Des weiteren besteht die Möglichkeit, komplette Kupplungsbaueinheiten in ihrer Gesamtheit schnell und problemlos auszuwechseln. Die einzelne Ausgestaltung der möglichen axialen Verschiebewege sowie der Passungen in diesen Bereichen obliegt in diesem Fall der Auslegung entsprechend den Kenntnissen des Fachmannes.

## Patentansprüche

1. Hydrodynamische Kupplungsbaueinheit (1) zur Drehmomentenübertragung zwischen einer An- und einer Abtriebswelle in einer Kraftübertragungseinheit;
1.1 mit wenigstens zwei Schaufelrädern (4, 5), einem ersten Schaufelrad und zweiten Schaufelrad, die wenigstens einen torusförmigen Arbeitsraum (6,7) miteinander bilden und die jeweils mit einem, mit der An- (2) bzw. Abtriebswelle (8) drehfest verbundenen und axial gesicherten nabenartigen Element (14) drehfest verbindbar sind;
1.2 die hydrodynamische Kupplungsbaueinheit umfaßt ein Gehäuse (10) mit zwei sich über wenigstens einen Teil der radialen Abmessungen des Gehäuses (10) erstreckenden axialen Stirnwänden (12.1, 12.2); **gekennzeichnet durch** folgende Merkmale:
1.3 wenigstens einem Schaufelrad (4,5) ist eine Zwischennabe (13) zur drehfesten Verbindung mit dem, mit der An- (2) oder Abtriebswelle (8) drehfest verbundenen nabenartigen Element (14) zugeordnet;
1.4 die Zwischennabe (13) ist mit dem Schaufelrad (4,5) drehfest gekoppelt;
1.5 die Zwischennabe (13) erstreckt sich vom Schaufelrad (4,5) in axialer Richtung wenigstens bis unmittelbar über die axiale Stirnwand (12.1,12.2) hinaus;
1.6 es sind erste Mittel vorgesehen, mittels welcher im unmontierten Zustand des Kupplungsbaueinheit die Zwischennabe (13) am Gehäuse (10) lösbar befestigbar ist;
1.7 wenigstens ein Teil einer von der axialen Stirnwand wegweisenden Fläche der Zwischennabe (13) bildet eine Anliegfläche (29a) für einen an dem nabenartigen Element (14) vorgesehenen Anschlag (25);
1.8 es sind weitere zweite Mittel zur Realisierung einer drehfesten Verbindung der Zwischennabe (13) mit dem nabenartigen Element (14) am nabenartigen Element vorgesehen.

2. Hydrodynamische Kupplungsbaueinheit nach Anspruch 1 **gekennzeichnet durch** die folgenden Merkmale:
2.1 die Zwischennabe (13) umfaßt ein erstes rotationssymetrisches Element und einen flanschartigen Endbereich (26);
2.2 der flanschartige Endbereich (26) ist in axialer Richtung außerhalb der axialen Stirnwand (12.1, 12.2) angeordnet;
2.3 die ersten Mittel sind als Befestigungselemente (17.1) ausgeführt.

3. Hydrodynamische Kupplungsbaueinheit (1) nach Anspruch 2, **dadurch gekennzeichnet, daß** das rotationssysmmetrische Element rohrförmig ausgebildet ist

4. Hydrodynamische Kupplungsbaueinheit (1) nach einem der Ansprüche 1 bis 3, **dadurch gekennzeichnet, daß** die ersten Mittel als Schraubverbindungselemente (17.1) ausgebildet sind.

5. Hydrdynamische Kupplungsbaueinheit (1) nach einem der . Ansprüche 1 bis 4, **dadurch gekennzeichnet, daß** eine Einrichtung (15) zur Zentrierung der Zwischennabe in radialer und/oder axialer Richtung im Gehäuse (10) vorgesehen ist

6. Hydrodynamische Kupplungsbaueinheit (1) nach Anspruch 5, **gekennzeichnet durch** die folgenden Merkmale.
6.1 die Einrichtung (15) wird von einem am Gehäuse befestigbaren, wenigstens einen Innendurchmesser aufweisenden Element, welches die Zwischennabe (13) in Umfangsrichtung umschließt, gebildet;
6.2 das Element ist zwischen Schaufelrad (4, 5)und axialer Stirnwand (12.1, 12.2) angeordnet.

7. Hydrodynamische Kupplungsbaueinheit (1) nach einem der Ansprüche 5 oder 6, **gekennzeichnet durch** folgende Merkmale:
7.1 die Einrichtung (15) zur axialen und/oder radialen Zentrierung der Zwischennabe weist im Bereich von deren Innendurchmesser Vorsprünge (41, 42) auf;
7.2 die Zwischennabe (13) weist an deren Außendurchmesser Vorsprünge (38, 39) auf;
7.3 die am Innendurchmesser der Einrichtung (15) und am Außendurchmesser der Zwischennabe (13) vorgesehenen Vorsprünge (41, 42, 38, 39) sind derart ausgeführt, daß bei einer Bewegung der Zwischennabe (13) in axialer Richtung die Vorsprünge am Innendurchmesser der Einrichtung (15) wenigstens einen Anschlag bilden.

8. Hydrodynamische Kupplungsbaueinheit (1) nach Anspruch 7, **dadurch gekennzeichnet, daß** die Vorsprünge (41, 42, 38, 39) wenigstens zwei Anschläge bilden.

9. Hydrodynamische Kupplungsbaueinheit (1) nach einem der Ansprüche 7 oder 8, **dadurch gekennzeichnet, daß** ein weiterer Anschlag an der axialen Gehäusewand (12.1, 12.2) gebitdet wird.

10. Hydrodynamische Kupplungsbaueinheit (1)nach einem der Ansprüche 5 bis 9, **dadurch gekennzeichnet, daß** die Einrichtung (15) an der Gehäusestimwand (12.1, 12.2) befestigt ist

11. Hydrodynamische Kupplungsbaueinheit (1)nach einem der Ansprüche 5 bis 10, **dadurch gekennzeichnet, daß** die Einrichtung (15)als ringförmiges Element ausgebildet ist

12. Kraftübertragungseinheit mit einer wenigstens mittelbar mit einer Antriebsmaschine koppelbaren Antriebswelle, einer Abtriebswelle und einer hydrodynamischen Kupplungsbaueinheit (1) zur Drehmomentenübertragung zwischen An- (2) und Abtriebswelle (8) gemäß einem der Ansprüche 1 bis 11.

13. Kraftübertragungseinheit nach Anspruch 12, **dadurch gekennzeichnet, daß** die Zwischennabe (13) zwischen dem als Primärschaufelrad (4) ausgebildeten Schaufelrad und dem mit der Antriebswelle (2) drehfest verbundenen nabenartigen Element (14) angeordnet ist

14. Kraftübertragungseinheit nach Anspruch 12 oder 13, **gekennzeichnet durch** die folgenden Merkmale:
14.1 das nabenartige Element (14) ist in wenigstens zwei Bereiche unterteübar - einen ersten Bereich und einen zweiten Bereich;
14.2 der erste Bereich umfäßt Mittel zur drehfesten Verbindung des nabenartigen Elementes (14) mit der An- (2) bzw. Abtriebswelle (8);
14.3 im zweiten Bereich ist der axiale Anschlag (25) für die Zwischennabe (13) ausgebildet

15. Kraftübertragungseinheit nach Anspruch 14, **dadurch gekennzeichnet, daß** der axiale Anschlag (25) von wenigstens einem Teil einer zur Kupplungsbaueinheit (1) weisenden Stimfläche (30) im zweiten Bereich gebildet wird, an welcher die Zwischennabe (13) mit einem Teil einer zur Antriebsmaschine weisenden Stimfläche (29a) anlegbar ist

16. Kraftübertragungseinheit nach Anspruch 15, **gekennzeichnet durch** folgende Merkmale:
16.1 die den Anschlag (25) bildende, zur Kupplungsbaueinheit weisende Stirnfläche (30) ist Bestandteil wenigstens einer Ausnehmung im zweiten Bereich des nabenartigen Elementes (14) in Richtung zur Antriebsmaschine;
16.2 die **durch** die Ausnehmungen gebildeten, im wesentlichen koaxial zur An- (2) bzw. Abtriebswelle (8) verlaufenden Flächen (31) bilden einen Anschlag für die Zwischennabe in radialer Richtung;
16.3 die Zwischenabe (13) weist einen zur Ausnehmung komplementären Vorsprung auf.

17. Kraftübertragungseinrichtung nach Anspruch 16, **dadurch gekennzeichnet, daß** die Ausnehmung sich von einem Durchmesser, welcher kleiner dem Außendurchmesser des nabenartigen Elementes im zweiten Bereich ist, bis zum Außendurchmesser des nabenartigen Elementes erstreckt.

18. Kraftübertragungseinheit nach einem der Ansprüche 14 bis 16, **gekennzeichnet durch** folgende Merkmale:
18.1 der zweite Bereich umfaßt ein im wesentlichen scheibenförmiges Element (22);
18.2 das scheibenförmge Element (22) grenzt mit wenigstens einem Teil seiner Fläche an die zur Kupplungseinheit (1) weisende Stirnseite der An- bzw. Abtriebswelle (2,8).

19. Kraftübertragungseinheit nach Anspruch 18, **dadurch gekennzeichnet, daß** der Anschlag (25) von wenigstens einem Teil einer zur Kupplungsbaueinheit (1) weisenden Stirnfläche des scheibenförmigen Elementes (22) gebildet wird.

20. Kraftübertragungseinheit nach einem der Ansprüche 14 bis 19, **gekennzeichnet durch** folgende Merkmale:
20.1 das nabenartige Element (14) umfaßt einen weiteren dritten Bereich;
20.2 der dritte Bereich ist als ringförmiges Element (24) ausgebildet;
20.3 der Außendurchmesser d_{AN} im dritten Bereich ist geringer als der Innendurchmesser d_{izn} der Zwischennabe (13);
20.4 es sind Mittel zur Vorzentrierung zwischen nabenartigen Element (14) und Zwischennabe (13) vorgesehen.

21. Kraftübertragungseinheit nach Anspruch 20, **dadurch gekennzeichnet, daß** das Mittel zur Vorzentrierung zwischen nabenartigen Element (14) und Zwischennabe (13) wenigstens ein am Innendurchmesser d_{izn} der Zwischennabe (14) angeordneter Vorsprung (35) ist, dessen kleinster Innendurchmesser geringfügig größer als der Außendurchmesser d_{AN} des nabenartigen Elementes (14) im dritten Bereich ist.

22. Kraftübertragungseinheit nach einem der Ansprüche 12 bis 28, **dadurch gekennzeichnet, daß** die zweiten Mittel (17.2) zur Realisierung einer drehfesten Verbindung zwischen nabenartigen Element (14) und Zwischennabe (13) von Verbindungselementen (17.2) gebildet werden.

23. Kraftübertragungseinheit nach Anspruch 22, **dadurch gekennzeichnet, daß** die Verbindungselemente (17.2) und die Befestigungselemente (17.1) gleichen Typs und gleicher Größe sind.

24. Kraftübertragungseinheit nach einem der Ansprüche 12 bis 23, **dadurch gekennzeichnet, daß** die Zwischennabe zwischen Sekundärschaufelrad (5) und dem mit der Abtriebswelle (8) drehfest verbundenen nabenartigen Element vorgesehen ist.

25. Kraftübertragungseinheit nach einem der Ansprüche 2 bis 24, **gekennzeichnet durch** folgende Merkmale:
25.1 das Gehäuse (10) ist auf der Seite der Zwischennabe (13) in axialer Richtung von der axialen Gehäusestirnwand (12.1) weggerichtet verlängert ausgeführt;
25.2 die Verlängerung (50) weist einen flanschartig gestalteten Endbereich (18) auf;
25.3 der flanschartige Endbereich (18) weist Durchgangslöcher oder Gewinde (19) zur Aufnahme von Verbindungselementen zur Befestigung an einem Gehäuse der benachbarten Elemente.

26. Kraftübertragungseinheit nach Anspruch 25, **gekennzeichnet durch** folgende Merkmale.
26.1 die Zwischennabe (13) ist zwischen Primärrad (4) und dem mit der Antriebswelle (2) drehfest verbundenen nabenartigen Element (14) vorgesehen;
26.2 der flanschartige Endbereich (18) des in axialer Richtung verlängert ausgeführten Gehäuses (10) ist am Gehäuse der Antriebsmaschine befestigbar.

27. Kraftübertragungseinheit nach Anspruch 25 oder 26, **gekennzeichnet durch** folgende Merkmale:
27.1 die Zwischennabe (13) ist zwischen Sekundärrad (5) und dem mit der Abtriebswelle (8) drehfest verbundenen nabenartigen Element vorgesehen;
27.2 die Abtriebswelle (8) ist als Eingangswelle eines der Kupplung nachgeordneten Getriebes ausgeführt;
27.3 der flanschartige Endbereich des in axialer Richtung verlängert ausgeführten Gehäuses ist am Gehäuse des Getriebes befestigbar.

28. Kraftübertragungseinheit nach einem der Ansprüche 12 bis 27, **gekennzeichnet durch** folgende Merkmale:
28.1 es sind wenigstens zwei Primärräder (4.1, 4.2) und zwei Sekundärräder (5.1, 5.2) vorgesehen;
28.2 die Primärräder (4.1, 4.2) sind mittels eines zylindrischen Körpers (9) miteinander drehfest verbunden;
28.3 die Primär- (4.1, 4.2) und Sekundärräder (5.1, 5.2) bilden zwei torusförmige Arbeitsräume (6, 7) miteinander.

29. Kraftübertragungseinheit nach einem der Ansprüche 12 bis 28, **dadurch gekennzeichnet, daß** die Zwischennabe (13) und das Schaufelrad (4.1) von einem Bauteil gebildet werden.

## Claims

1. A hydrodynamic coupling assembly (1) for the transmission of torque between a drive shaft and a driven shaft in a transmission unit;
1.1 with at least two impellers (4,5), a first impeller and a second impeller which mutually form at least one toroidal working chamber (6,7) with each other and which can be connected in a torsionally rigid way with a hub-like element (14) which is torsionally rigidly connected with the drive shaft (2) or the driven shaft (8) and is axially secured;
1.2 the hydrodynamic coupling assembly comprises a housing (10) with two axial face walls (12.1, 12.2) which extend at least over a part of the radial dimensions of the housing (10);
**characterized by** the following features:
1.3 an intermediate hub (13) is assigned to at least one impeller (4,5) for the purpose of the torsionally rigid connection with the hub-like element (14) which is torsionally rigidly connected with the drive shaft (2) or driven shaft (8);
1.4 the intermediate hub (13) is torsionally rigidly coupled with the impeller (4,5);
1.5 the intermediate hub (13) extends from the impeller (4,5) in the axial direction at least up to a point directly beyond the axial face wall (12.1, 12.2);
1.6 first means are provided by means of which, in the non-mounted state of the coupling assembly, the intermediate hub (13) can be fastened detachably on the housing (10);
1.7 at least one part of a surface of the intermediate hub (13) which is averted from the axial face wall forms a bearing surface (29a) for a stop (25) provided on the hub-like element (14);
1.8 two further means are provided on the hub-like element for realizing a torsionally rigid connection of the intermediate hub (13) with the hub-like element (14);

2. A hydrodynamic coupling assembly as claimed in claim 1, **characterized by** the following features:
2.1 the intermediate hub (13) comprises a first rotationally symmetrical element and a flange-like end zone (26);
2.2 the flange-like end zone (26) is arranged in the axial direction outside of the axial face wall (12.1, 12.2);
2.3 the first means are arranged as fastening elements (17.1).

3. A hydrodynamic coupling assembly (1) as claimed in claim 2, **characterized in that** the rotationally symmetrical element is arranged in a tubular way.

4. A hydrodynamic coupling assembly (1) as claimed in one of the claims 1 to 3, **characterized in that** the first means are arranged as screw joint elements (17.1).

5. A hydrodynamic coupling assembly (1) as claimed in one of the claims 1 to 4, **characterized in that** a device (15) is provided for centering the intermediate hub in the radial and/or axial direction in the housing (10).

6. A hydrodynamic coupling assembly (1) as claimed in claim 5, **characterized by** the following features:
6.1 the device (15) is formed by an element which can be fastened to the housing, has at least an inside diameter which encloses the intermediate hub (13) in the circumferential direction;
6.2 the element is arranged between the impeller (4,5) and the axial face wall (12.1, 12.2).

7. A hydrodynamic coupling assembly (1) as claimed in one of the claims 5 or 6, **characterized by** the following features:
7.1 the device (15) for the axial and/or radial centering of the intermediate hub comprises projections (41, 42) in the region of its inside diameter;
7.2 the intermediate hub (13) comprises projections (38, 39) on its outside diameter;
7.3 the projections (41, 42, 38, 39) provided on the inside diameter of the device (15) and on the outside diameter of the intermediate hub (13) are configured in such a way that in the case of a movement of the intermediate hub (13) in the axial direction the projections form at least one stop on the inside diameter of the device (15);

8. A hydrodynamic coupling assembly (1) as claimed in claim 7, **characterized in that** the projections (41, 42, 38, 39) form at least two stops.

9. A hydrodynamic coupling assembly (1) as claimed in one of the claims 7 or 8, **characterized in that** a further stop is formed on the axial housing wall (12.1, 12.2).

10. A hydrodynamic coupling assembly (1) as claimed in one of the claims 5 to 9, **characterized in that** the device (15) is fastened to the face wall (12.1, 12.2) of the housing.

11. A hydrodynamic coupling assembly (1) as claimed in one of the claims 5 to 10, **characterized in that** the device (15) is arranged as an annular element.

12. A transmission unit with a drive shaft which can be coupled at least indirectly with a drive motor, a driven shaft and a hydrodynamic coupling assembly (1) for the transmission of torque between drive (2) and driven shaft (8) as claimed in one of the claims 1 to 11.

13. A transmission unit as claimed in claim 12, **characterized in that** the intermediate hub (13) is arranged between the impeller arranged as a primary impeller (4) and the hub-like element (14) which is torsionally rigidly connected with the drive shaft (2).

14. A transmission unit as claimed in claim 12 or 13, **characterized by** the following features:
14.1 the hub-like element (14) can be divided into at least two regions, a first region and a second region;
14.2 the first region comprises means for the torsionally rigid connection of the hub-like element (14) with the drive (2) or driven shaft (8);
14.3 the axial stop (25) for the intermediate hub (13) is arranged in the second region.

15. A transmission unit as claimed in claim 14, **characterized in that** the axial stop (25) is formed by at least one part of a face surface (30) in the second region, which face surface faces towards a part of the coupling assembly (1) and on which the intermediate hub (13) can be placed with a part of a face surface (29a) facing towards the drive motor.

16. A transmission unit as claimed in claim 15, **characterized by** the following features:
16.1 the face surface (30) forming the stop (25) and facing towards the coupling assembly is the component of at least one recess in the second region of the hub-like element (14) in the direction towards the drive motor;
16.2 the surfaces (31) formed by the recesses and extending substantially coaxially to the drive (2) or driven shaft (8) form a stop for the intermediate hub in the radial direction;
16.3 the intermediate hub (13) comprises a projection complementary to the recess.

17. A transmission device as claimed in claim 16, **characterized in that** the recess extends from a diameter which is smaller than the outside diameter of the hub-like element in the second region up to the outside diameter of the hub-like element.

18. A transmission unit as claimed in one of the claims 14 to 16, **characterized by** the following features:
18.1 the second region comprises a substantially disk-like element (22);
18.2 the disk-like element (22) borders with at least one part of its surface on the face side of the drive or driven shaft (2, 8) facing towards the coupling assembly (1).

19. A transmission unit as claimed in claim 18, **characterized in that** the stop (25) is formed by at least a part of a face surface of the disk-like element (22), which face surface faces towards the coupling assembly (1).

20. A transmission unit as claimed in one of the claims 14 to 19, **characterized by** the following features:
20.1 the hub-like element (14) comprises a further third region;
20.2 the third region is arranged as an annular element (24);
20.3 the outside diameter d_{AN} in the third region is smaller than the inside diameter d_{IN} of the intermediate hub (13);
20.4 means are provided for pre-centering between the hub-like element (14) and the intermediate hub (13).

21. A transmission unit as claimed in claim 20, **characterized in that** the means for pre-centering between the hub-like element (14) and the intermediate hub (13) is at least one projection (35) arranged on the inside diameter d_{IN} of the intermediate hub (14) whose smallest inside diameter is slightly larger than the outside diameter d_{AN} of the hub-like element (14) in the third region.

22. A transmission unit as claimed in one of the claims 12 to 28, **characterized in that** the second means (17.2) are provided for realizing a torsionally rigid connection between the hub-like element (14) and the intermediate hub (13) of connecting elements (17.2).

23. A transmission unit as claimed in claim 22, **characterized in that** the connecting elements (17.2) and the fastening elements (17.1) are of the same type and same size.

24. A transmission unit as claimed in one of the claims 12 to 23, **characterized in that** the intermediate hub is provided between the secondary impeller (5) and the hub-like element which is torsionally rigidly connected with the driven shaft (8).

25. A transmission unit as claimed in one of the claims 2 to 24, **characterized by** the following features:
25.1 the housing (10) is provided on the side of the intermediate hub (13) in the axial direction with an extended configuration facing away from the axial housing face wall (12.1);
25.2 the extension (50) has an end zone (18) which is arranged in a flange-like manner;
25.3 the flange-like end zone (18) has pass-through holes or a thread (19) for receiving connection elements for fastening to a housing of the adjacent elements.

26. A transmission unit as claimed in claim 25, **characterized by** the following features:
26.1 the intermediate hub (13) is provided between the primary impeller (4) and the hub-like element (14) which is connected in a torsionally rigid way with the drive shaft (2);
26.2 the flange-like end zone (18) of the housing (10) which is extended in the axial direction can be fastened to the housing of the drive motor.

27. A transmission unit as claimed in claim 25 or 26, **characterized by** the following features:
27.1 the intermediate hub (13) is provided between the secondary impeller (5) and the hub-like element which is connected with the driven shaft (8) in a torsionally rigid way;
27.2 the driven shaft (8) is configured as an input shaft of a gear downstream of the coupling;
27.3 the flange-like end zone of the housing extended in the axial direction can be fastened to the housing of the gear.

28. A transmission unit as claimed in one of the claims 12 to 27, **characterized by** the following features:
28.1 at least two primary impellers (4.1, 4.2) and two secondary impellers (5.1, 5.2) are provided;
28.2 the primary impellers (4.1, 4,2) are mutually connected in a torsionally rigid way by means of a cylindrical body (9).
28.3 the primary impellers (4.1, 4.2) and the secondary impellers (5.1, 5.2) form two toroidal working chambers (6, 7) with each other.

29. transmission unit as claimed in one of the claims 12 to 28, **characterized in that** the intermediate hub (13) and the impeller (4.1) are formed by one component.

## Revendications

1. Sous-ensemble d'accouplement hydrodynamique (1) pour la transmission de couple entre un arbre menant et un arbre mené dans une unité de transmission de puissance ;
1.1 avec au moins deux roues à pales (4, 5), une première roue à pales et une deuxième roue à pales, qui forment entre elles au moins une enceinte de travail (6, 7) de forme torique et qui sont chacune aptes à être fixées en rotation avec un élément (14) formant une sorte de moyeu et solidaire en rotation de l'arbre menant (2), voire de l'arbre mené (8) auquel il est assujetti suivant la direction axiale ;
1.2 le sous-ensemble d'accouplement hydrodynamique comporte un carter (10) avec deux parois d'extrémité (12.1, 12.2) axiales s'étendant sur au moins une partie des dimensions radiales du carter (10) ;
**caractérisé par** les dispositions suivantes :
1.3 un moyeu intermédiaire (13), destiné à être fixé en rotation avec l'élément en forme de moyeu (14) solidaire en rotation de l'arbre menant (2) ou de l'arbre mené (8), est associé à au moins une roue à pales (4, 5) ;
1.4 le moyeu intermédiaire (13) est couplé en rotation à la roue à pales (4, 5) ;
1.5 le moyeu intermédiaire (13) s'étend suivant la direction axiale depuis la roue à pales (4, 5) au moins jusque tout juste au-delà de la paroi d'extrémité axiale (12.1, 12.2) ;
1.6 des premiers moyens sont prévus au moyen desquels le moyeu intermédiaire (13) peut être fixé de façon amovible au carter (10) quand le sous-ensemble d'accouplement n'est pas assemblé ;
1.7 au moins une partie d'une face du moyeu intermédiaire (13) détournée de la paroi d'extrémité axiale forme une surface d'appui (29a) pour une butée (25) prévue sur l'élément en forme de moyeu (14) ;
1.8 des deuxièmes moyens sont en outre prévus sur l'élément en forme de moyeu pour solidariser en rotation le moyeu intermédiaire (13) et l'élément en forme de moyeu (14).

2. Sous-ensemble d'accouplement hydrodynamique selon la revendication 1, **caractérisé par** les dispositions suivantes :
2.1 le moyeu intermédiaire (13) comporte un premier élément rotationnellement symétrique et une zone d'extrémité en forme de collerette (26) ;
2.2 la zone d'extrémité en forme de collerette (26) est disposée suivant la direction axiale en dehors de la paroi d'extrémité axiale (12.1, 12.2) ;
2.3 les premiers moyens sont réalisés sous forme d'éléments de fixation (17.1).

3. Sous-ensemble d'accouplement hydrodynamique (1) selon la revendication 2, **caractérisé en ce que** l'élément rotationnellement symétrique est conformé sous forme de tube.

4. Sous-ensemble d'accouplement hydrodynamique (1) selon l'une quelconque des revendications 1 à 3, **caractérisé en ce que** les premiers moyens sont conformés en forme d'éléments de boulonnage (17.1 ).

5. Sous-ensemble d'accouplement hydrodynamique (1) selon l'une quelconque des revendications 1 à 4, **caractérisé en ce qu'**il est prévu un organe (15) destiné à centrer le moyeu intermédiaire dans la direction radiale et/ou axiale dans le carter (10).

6. Sous-ensemble d'accouplement hydrodynamique (1) selon la revendication 5, **caractérisé par** les dispositions suivantes :
6.1 l'organe (15) est formé par un élément apte à être fixé sur le carter et comportant au moins un diamètre intérieur et qui entoure le moyeu intermédiaire (13) sur sa circonférence ;
6.2 l'élément est disposé entre la roue à pales (4, 5) et la paroi d'extrémité (12.1, 12.2).

7. Sous-ensemble d'accouplement hydrodynamique (1) selon l'une quelconque des revendications 5 ou 6, **caractérisé par** les dispositions suivantes :
7.1 l'organe (15) pour le centrage axial et/ou radial du moyeu intermédiaire comporte des saillies (41, 42) au niveau de son diamètre intérieur;
7.2 le moyeu intermédiaire (13) comporte des saillies (38, 39) sur son diamètre extérieur ;
7.3 les saillies (41, 42, 38, 39) prévues sur le diamètre intérieur de l'organe (15) et sur le diamètre extérieur du moyeu intermédiaire (13) sont réalisées de manière à ce que les saillies sur le diamètre intérieur de l'organe (15) forment au moins une butée lorsque le moyeu intermédiaire (13) se déplace dans la direction axiale.

8. Sous-ensemble d'accouplement hydrodynamique (1) selon la revendication 7, **caractérisé en ce que** les saillies (41, 42, 38, 39) forment au moins deux butées.

9. Sous-ensemble d'accouplement hydrodynamique (1) selon l'une quelconque des revendications 7 ou 8, **caractérisé en ce qu'**une autre butée est formée dans la paroi axiale (12.1, 12.2) du carter.

10. Sous-ensemble d'accouplement hydrodynamique (1) selon l'une quelconque des revendications 5 à 9, **caractérisé en ce que** l'organe (15) est fixé sur la paroi d'extrémité (12.1, 12.2) du carter.

11. Sous-ensemble d'accouplement hydrodynamique (1) selon l'une quelconque des revendications 5 à 10, **caractérisé en ce que** l'organe (15) est conformé en forme d'élément annulaire.

12. Unité de transmission de puissance avec un arbre menant apte à être couplé, du moins indirectement, à une machine motrice, un arbre mené et un sous-ensemble d'accouplement hydrodynamique (1) pour la transmission de couple entre l'arbre menant (2) et l'arbre mené (8) selon l'une quelconque des revendications 1 à 11.

13. Unité de transmission de puissance selon la revendication 12, **caractérisée en ce que** le moyeu intermédiaire (13) est disposé entre la roue à pales qui est conformée pour faire office de roue à pales primaire (4) et l'élément en forme de moyeu (14) qui est solidaire en rotation de l'arbre menant (2).

14. Unité de transmission de puissance selon l'une quelconque des revendications 12 ou 13, **caractérisée par** les dispositions suivantes :
14.1 l'élément en forme de moyeu (14) peut être divisé en deux zones au moins - une première zone et une deuxième zone ;
14.2 la première zone comporte des moyens destinés à solidariser en rotation l'élément en forme de moyeu (14) et l'arbre menant (2) ou l'arbre mené (8) ;
14.3 c'est dans la deuxième zone qu'est formée la butée axiale (25) pour le moyeu intermédiaire (13).

15. Unité de transmission de puissance selon la revendication 14, **caractérisée en ce que** la butée axiale (25) est formée par au moins une partie d'une face d'extrémité (30) dirigée vers le sous-ensemble d'accouplement (1) dans la deuxième zone sur laquelle est destinée à venir en appui une partie d'une face d'extrémité (29a) dirigée vers la machine motrice du moyeu intermédiaire (13).

16. Unité de transmission de puissance selon la revendication 15, **caractérisée par** les dispositions suivantes :
16.1 la face d'extrémité (30) dirigée vers le sous-ensemble d'accouplement et formant la butée (25) est partie constitutive d'au moins une découpe ménagée dans la deuxième zone de l'élément en forme de moyeu (14) en direction de la machine motrice ;
16.2 les faces (31) formées par les découpes et qui s'étendent sensiblement coaxialement par rapport à l'arbre menant (2), voire à l'arbre mené (8), forment une butée pour le moyeu intermédiaire selon la direction radiale ;
16.3 le moyeu intermédiaire (13) comporte une saillie complémentaire à la découpe.

17. Unité de transmission de puissance selon la revendication 16, **caractérisée en ce que** la découpe s'étend, depuis un diamètre inférieur au diamètre extérieur de l'élément en forme de moyeu dans la deuxième zone jusqu'au diamètre extérieur de l'élément en forme de moyeu.

18. Unité de transmission de puissance selon l'une quelconque des revendications 14 à 16, **caractérisée par** les dispositions suivantes :
18.1 la deuxième zone comporte un élément sensiblement en forme de disque (22) ;
18.2 une partie au moins de la surface de l'élément en forme de disque (22) est contiguë à la face d'extrémité de l'arbre menant ou mené (2, 8) dirigée vers le sous-ensemble d'accouplement (1 ).

19. Unité de transmission de puissance selon la revendication 18, **caractérisée en ce que** la butée (25) est formée par au moins une partie d'une face d'extrémité dirigée vers le sous-ensemble d'accouplement (1) de l'élément en forme de disque (22).

20. Unité de transmission de puissance selon l'une quelconque des revendications 14 à 19, **caractérisée par** les dispositions suivantes :
20.1 l'élément en forme de moyeu (14) comporte encore une troisième zone ;
20.2 la troisième zone est conformée en forme d'élément annulaire (24) ;
20.3 le diamètre extérieur d_{AN} dans la troisième zone est inférieur au diamètre intérieur d_{IZN} du moyeu intermédiaire (13) ;
20.4 des moyens destinés au précentrage sont prévus entre l'élément en forme de moyeu (14) et le moyeu intermédiaire (13).

21. Unité de transmission de puissance selon la revendication 20, **caractérisée en ce que** le moyen destiné au précentrage prévu entre l'élément en forme de moyeu (14) et le moyeu intermédiaire (13) est au moins une saillie (35) qui est disposée sur le diamètre intérieur d_{IZN} du moyeu intermédiaire (13) et dont le plus petit diamètre intérieur est légèrement supérieur au diamètre extérieur d_{AN} de l'élément en forme de moyeu (14) dans la troisième zone.

22. Unité de transmission de puissance selon l'une quelconque des revendications 12 à 28, **caractérisée en ce que** les deuxièmes moyens (17.2) destinés à assurer une solidarisation en rotation entre l'élément en forme de moyeu (14) et le moyeu intermédiaire (13) sont formés par des éléments de liaison (17.2).

23. Unité de transmission de puissance selon la revendication 22, **caractérisée en ce que** les éléments de liaison (17.2) et les éléments de fixation (17.1) sont de même type et de même taille.

24. Unité de transmission de puissance selon l'une quelconque des revendications 12 à 23, **caractérisée en ce que** le moyeu intermédiaire est prévu entre la roue à pales secondaire (5) et l'élément en forme de moyeu solidaire en rotation de l'arbre mené (8).

25. Unité de transmission de puissance selon l'une quelconque des revendications 2 à 24, **caractérisée par** les dispositions suivantes :
25.1 du côté du moyeu intermédiaire (13), le carter (10) comporte un prolongement qui s'étend dans la direction axiale à partir de la paroi d'extrémité axiale (12.1) du carter ;
25.2 le prolongement (50) comporte une zone d'extrémité (18) conformée en forme de collerette ;
25.3 la zone d'extrémité en forme de collerette (18) comporte des trous traversants ou des filetages (19) destinés à recevoir des éléments de liaison prévus pour fixer les éléments voisins sur le carter.

26. Unité de transmission de puissance selon la revendication 25, **caractérisée en ce que**
26.1 le moyeu intermédiaire (13) est prévu entre la roue primaire (4) et l'élément en forme de moyeu (14) solidaire en rotation de l'arbre menant (2) ;
26.2 la zone d'extrémité en forme de collerette (18) du carter (10) comportant un prolongement dans la direction axiale est apte à être fixé sur le carter de la machine motrice.

27. Unité de transmission de puissance selon l'une quelconque des revendications 25 ou 26, **caractérisée par** les dispositions suivantes :
27.1 le moyeu intermédiaire (13) est prévu entre la roue secondaire (5) et l'élément en forme de moyeu solidaire en rotation de l'arbre mené (8) ;
27.2 l'arbre mené (8) est réalisé sous forme d'arbre d'entrée d'un engrenage monté en aval de l'accouplement ;
27.3 la zone d'extrémité en forme de collerette du carter comportant un prolongement s'étendant dans la direction axiale est apte à être fixé sur le carter de l'engrenage.

28. Unité de transmission de puissance selon l'une quelconque des revendications 12 à 27, **caractérisée par** les dispositions suivantes :
28.1 au moins deux roues primaires (4.1, 4.2) et deux roues secondaires (5.1, 5.2) sont prévues ;
28.2 les roues primaires (4.1, 4.2) sont solidarisées en rotation entre elles au moyen d'un corps cylindrique (9) ;
28.3 les roues primaires (4.1, 4.2) et secondaires (5.1, 5.2) forment entre elles deux enceintes de travail (6, 7) de forme torique.

29. Unité de transmission de puissance selon l'une quelconque des revendications 12 à 28, **caractérisée en ce que** le moyeu intermédiaire (13) et la roue à pales (4.1) ne constituent qu'une seule et même pièce.
